# EUROPEAN PATENT SPECIFICATION

(11) **EP 3 444 125 B1**
(45) Date of publication and mention of the grant of the patent: **05.08.2020**
(21) Application number: 18187835.6
(22) Date of filing: 07.08.2018
(51) Int. Cl.: B60C 1/00

(54) **FUNCTIONALIZED ELASTOMER**
FUNKTIONALISIERTES ELASTOMER
ÉLASTOMÈRES FONCTIONNALISÉS

(30) Priority: 15.08.2017 US 201715677515; 15.08.2017 US 201715677531
(43) Date of publication of application: 20.02.2019
(73) Proprietor: The Goodyear Tire & Rubber Company, Akron, OH 44316 (US)
(72) Inventor: MECKING, Stefan, D-78464 Konstanz (DE); FLOOK VIELHABER, Margaret, Kent, OH Ohio 44240 (US); LEICHT, Hannes, 78467 Konstanz (DE); GOTTKER GENANNT SCHNETMANN, Inigo, D-78462 Konstanz (DE)
(74) Representative: Kutsch, Bernd

(56) References cited:
- EP-A1- 3 042 786
- EP-A1- 3 181 593
- US-B1- 6 344 538
- US-B1- 8 598 286
- HANNES LEICHT ET AL: "Synergetic Effect of Monomer Functional Group Coordination in Catalytic Insertion Polymerization", JOURNAL OF THE AMERICAN CHEMICAL SOCIETY, vol. 139, no. 20, 15 May 2017 (2017-05-15) , pages 6823-6826, XP55440730, ISSN: 0002-7863, DOI: 10.1021/jacs.7b03087

## Description

### Background of the Invention

Stereoregular polymers like polypropylene and polydienes are produced on a large scale by catalytic insertion polymerization. The production of synthetic rubbers like polybutadiene and polyisoprene traditionally employs Ziegler-Natta catalysis based on e.g. Ti, Co, or Ni, and Nd catalysts. Nd-based systems are known to yield butadiene rubber with the highest 1,4-*cis* content. This is important, as microstructure control is paramount in the synthesis of synthetic rubber because it translates directly to different polymer properties like glass transition temperature, crystallinity, or strain-induced crystallization. These properties are significant for tire manufacturing, the main application of synthetic rubber. Besides microstructure control, the functionalization with polar groups can give access to improved properties of such materials. Especially for tire applications, enhanced interactions with the filler materials used (e.g. silica or carbon black) are desired. However, copolymerizations of 1,3-butadiene or isoprene with polar functionalized dienes are exclusively accomplished by free-radical methods that do not allow control over the polymer's microstructure. Recently work discloses the stereoselective insertion copolymerization of 1,3-butadiene and isoprene with various different polar functionalized dienes using cationic (allyl)Ni complexes (Leicht et al. ACS Macro Letters 2016, 5, (6), 777-780). The copolymerization of isoprene and 2-(4-methoxyphenyl)-1,3-butadiene catalyzed by a β-diketiminato yttrium bis(alkyl) complex was also recently reported (Cui et al. Polym. Chem. 2016, 7, (6), 1264-1270.) In view of industrial applications, a need remains to develop methods exhibiting the functional group tolerance of simple *in-situ* catalyst systems that are preferred by industry.

US-B1-6,344,538 describes a functionalized elastomer in accordance with the preamble of claim 1.

EP-A-3 181 593 describes a functionalized elastomer containing a nitrogen group. The elastomer may comprise a co-polymer that is similar to the co-polymer of formula II of this application.

### Summary of the Invention

The present invention is directed to a functionalized elastomer in accordance with claim 1, to a rubber composition in accordance with claim 3 and to a tire in accordance with claim 4.

Dependent claims refer to preferred embodiments of the invention.

In one aspect of the invention, the invention is directed to a copolymer given by the formula poly(M1 co M2) wherein M1 is a first monomer being 1,3-butadiene and M2 is of formula II 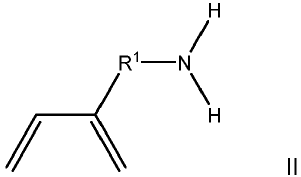 where R¹ is phenylene, a linear or branched alkane diyl group containing from 1 to 10 carbon atoms, or a combination of one or more phenylene groups and one or more linear or branched alkane diyl groups containing from 1 to 10 carbon atoms.

### Brief Description of the Drawings

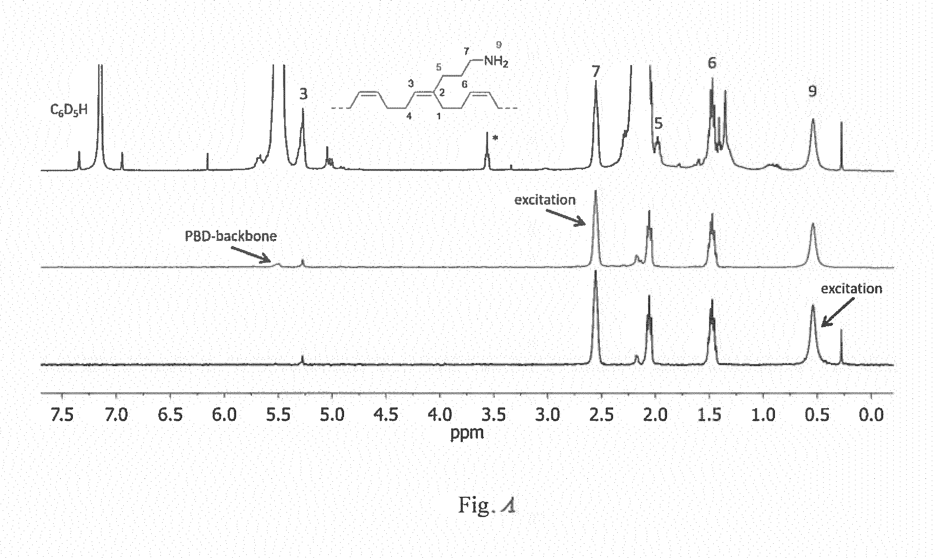

Figure 1 shows ¹H-NMR (topmost spectrum) and 1D-TOCSY spectra of a BD-1 (a monomer of formula I with R¹ = propyl and R² = methyl) copolymer after cleavage of the TMS-groups with MeOH (table 1, entry 1-1, recorded at 27 °C in C₆D₆). Residual THF is marked with *.

### Detailed Description of Example Embodiments of the Invention

There is disclosed a copolymer given by the formula poly(M1 co M2) wherein M1 is a first monomer being 1,3-butadiene and M2 is of formula II 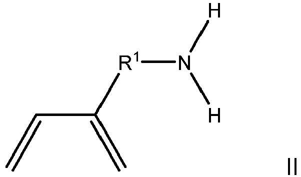 where R¹ is phenylene, a linear or branched alkane diyl group containing from 1 to 10 carbon atoms, or a combination of one or more phenylene groups and one or more linear or branched alkane diyl groups containing from 1 to 10 carbon atoms.

The repeat units of the copolymer derived from the comonomers may exhibit random distribution throughout the copolymer, however block copolymer or tapered copolymers are also possible structures of the polymers. The properties of the resulting copolymers may depend strongly both on the nature of the insertion of the comonomer and on the blockiness of the copolymer incorporation.

The copolymers preferably have a high cis 1,4 microstructure of units derived from the first monomer and second monomer. In one embodiment, being butadiene the first monomer, the copolymer comprises at least 90 percent by weight of cis 1,4 microstructure content based on the weight of the polybutadiene content of the copolymer. In one embodiment, the copolymer comprises at least 95 percent by weight of cis 1,4 microstructure content based on the weight of the polybutadiene content of the copolymer.

The copolymer may be made by a method comprising the steps of: polymerizing at least one first monomer being of 1,3-butadiene and a second monomer of formula I in the presence of a lanthanide-based coordination polymerization catalyst in a hydrocarbon solvent to form a first copolymer in solution; 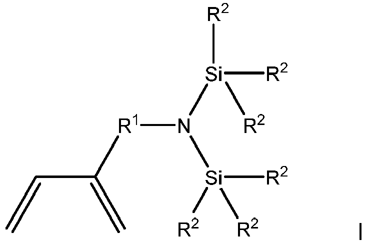
where R¹ is phenylene, a linear or branched alkane diyl group containing from 1 to 10 carbon atoms, or a combination of one or more phenylene groups and one or more linear or branched alkane diyl groups containing from 1 to 10 carbon atoms; and R² is methyl or ethyl;
mixing the first copolymer in solution with methanol followed by stirring to convert the first copolymer to a second copolymer given by the formula poly(M1 co M2) wherein M1 is the first monomer and M2 is of formula II 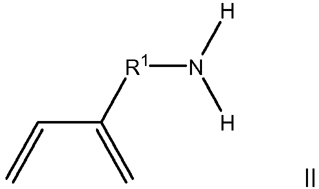
where R¹ is as previously defined.

In a first step of the method, the first copolymer is made via solution polymerization in the presence of a polymerization catalyst. Suitable catalysts include lanthanide catalyst systems based on neodymium and the like, and nickel based catalysts.

In one embodiment, the catalyst system is a nickel based system. Such nickel based catalyst systems contain (a) an organonickel compound, (b) an organoaluminum compound, and (c) a fluorine containing compound. Such nickel based catalyst systems and their use in the synthesis of polydienes is described in detail in US-A-3,856,764, US-A-3,910,869, and US-A-3,962,375.

In one embodiment, the catalyst is a neodymium catalyst system: 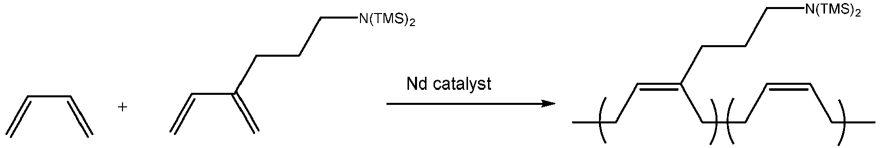 where R¹ and R² of units derived from monomer I are shown in the above example as propane diyl and trimethylsilyl groups.

Further description herein is directed to a neodymium based catalyst, although use of alternative lanthanide catalysts and nickel catalysts are also contemplated.

Such polymerizations are typically conducted in a hydrocarbon solvent that can be one or more aromatic, paraffinic, or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene, and the like, alone or in admixture.

In solution polymerizations that utilize the catalyst systems of this invention, there will normally be from 90 to 99 weight percent first monomer and 1 to 10 weight percent of second monomer in the polymerization medium. This second monomer concentration corresponds to a molar concentration of up to about 2 mole percent. Higher second monomer incorporation is possible, including up to 4, 11, 20, 45 and even 100 mole percent of second monomer. Such polymerization mediums are, of course, comprised of an organic solvent, the monomer, and the catalyst system. In some embodiments, the polymerization medium will contain from 75 to 99.5 weight percent first monomer. In some embodiments, the polymerization medium will contain from 0.5 to 25 weight percent second monomer.

The neodymium catalyst system used in the process of this invention is preferably made by preforming three catalyst components. These components are (1) an organoaluminum compound, (2) a neodymium carboxylate, and (3) a dialkyl aluminum chloride. In making the neodymium catalyst system the neodymium carboxylate and the organoaluminum compound are first reacted together for 10 minutes to 30 minutes in the presence of isoprene or butadiene to produce a neodymium-aluminum catalyst component. The neodymium carboxylate and the organoaluminum compound are preferable reacted for 12 minutes to 30 minutes and are more preferable reacted for 15 to 25 minutes in producing the neodymium-aluminum catalyst component.

The neodymium-aluminum catalyst component is then reacted with the dialkyl aluminum chloride for a period of at least 30 minutes to produce the neodymium catalyst system. The activity of the neodymium catalyst system normally improves as the time allowed for this step is increased up to about 24 hours. Greater catalyst activity is not normally attained by increasing the aging time over 24 hours. However, the catalyst system can be aged for much longer time periods before being used without any detrimental results.

The neodymium catalyst system will typically be preformed at a temperature that is within the range of from 0ºC to 100ºC. The neodymium catalyst system will more typically be prepared at a temperature that is within the range of from 10ºC to 60ºC. The neodymium catalyst system will preferably be prepared at a temperature that is within the range of from 15ºC to 30ºC.

The organoaluminum compound contains at least one carbon to aluminum bond and can be represented by the structural formula: 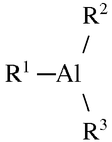 in which R¹ is selected from the group consisting of alkyl (including cycloalkyl), alkoxy, aryl, alkaryl, arylalkyl radicals and hydrogen; R² is selected from the group consisting of alkyl (including cycloalkyl), aryl, alkaryl, arylalkyl radicals and hydrogen and R³ is selected from a group consisting of alkyl (including cycloalkyl), aryl, alkaryl and arylalkyl radicals. Representative of the compounds corresponding to this definition are: diethylaluminum hydride, di-n-propylaluminum hydride, di-n-butylaluminum hydride, diisobutylaluminum hydride, diphenylaluminum hydride, di-p-tolylaluminum hydride, dibenzylaluminum hydride, phenylethylaluminum hydride, phenyl-n-propylaluminum hydride, p-tolylethylaluminum hydride, p-tolyl-n-propylaluminum hydride, p-tolylisopropylaluminum hydride, benzylethylaluminum hydride, benzyl-n-propylaluminum hydride, and benzylisopropylaluminum hydride and other organoaluminum hydrides. Also included are ethylaluminum dihydride, butylaluminum dihydride, isobutylaluminum dihydride, octylaluminum dihydride, amylaluminum dihydride and other organoaluminum dihydrides. Also included are diethylaluminum ethoxide and dipropylaluminum ethoxide. Also included are trimethylaluminum, triethylaluminum, tri-n-propylaluminum, triisopropylaluminum, tri-n-propylaluminum, triisopropylaluminim, tri-n-butylaluminum, triisobutylaluminum, tripentylaluminum, trihexylaluminum, tricyclohexylaluminum, trioctylaluminum, triphenylaluminum, tri-p-tolylaluminum, tribenzylaluminum, ethyldiphenylaluminum, ethyl-di-p-tolylaluminum, ethyldibenzylaluminum, diethylphenylaluminum, diethyl-p-tolylaluminum, diethylbenzylaluminum and other triorganoaluminum compounds.

The neodymium carboxylate utilizes an organic monocarboxylic acid ligand that contains from 1 to 20 carbon atoms, such as acetic acid, propionic acid, valeric acid, hexanoic acid, 2-ethylhexanoic acid, neodecanoic acid, lauric acid, stearic acid and the like neodymium naphthenate, neodymium neodecanoate, neodymium octanoate, and other neodymium metal complexes with carboxylic acid containing ligands containing from 1 to 20 carbon atoms.

The proportions of the catalyst components utilized in making the neodymium catalyst system of this invention can be varied widely. The atomic ratio of the halide ion to the neodymium metal can vary from 0.1/1 to 6/1. A more preferred ratio is from 0.5/1 to 3.5/1 and the most preferred ratio is 2/1. The molar ratio of the trialkylaluminum or alkylaluminum hydride to neodymium metal can range from 4/1 to 200/1 with the most preferred range being from 8/1 to 100/1. The molar ratio of isoprene or butadiene to neodymium metal can range from 0.2/1 to 3000/1 with the most preferred range being from 5/1 to 500/1.

The amount of catalyst used to initiate the polymerization can be varied over a wide range. Low concentrations of the catalyst system are normally desirable in order to minimize ash problems. It has been found that polymerizations will occur when the catalyst level of the neodymium metal varies between 0.05 and 1.0 millimole of neodymium metal per 100 grams of monomer. A preferred ratio is between 0.1 and 0.3 millimole of neodymium metal per 100 grams of monomer.

The concentration of the total catalyst system employed of course, depends upon factors such as purity of the system, polymerization rate desired, temperature and other factors. Therefore, specific concentrations cannot be set forth except to say that catalytic amounts are used.

Temperatures at which the polymerization reaction is carried out can be varied over a wide range. Usually the temperature can be varied from extremely low temperatures such as -60ºC up to high temperatures, such as 150ºC. or higher. Thus, the temperature is not a critical factor of the invention. It is generally preferred, however, to conduct the reaction at a temperature in the range of from 10ºC to 90ºC. The pressure at which the polymerization is carried out can also be varied over a wide range. The reaction can be conducted at atmospheric pressure or, if desired, it can be carried out at sub-atmospheric or super-atmospheric pressure. Generally, a satisfactory polymerization is obtained when the reaction is carried out at about autogenous pressure, developed by the reactants under the operating conditions used.

The polymerization can be terminated by the addition of an alcohol or another protic source, such as water, with or without an added stabilizer such as BHT. Such a termination step results in the formation of a protic acid. However, it has been unexpectedly found that better color can be attained by utilizing an alkaline aqueous neutralizer solution to terminate the polymerization. Another advantage of using an alkaline aqueous neutralizer solution to terminate the polymerization is that no residual organic materials are added to the polymeric product.

Polymerization can be terminated by simply adding an alkaline aqueous neutralizer solution to the polymer cement. The amount of alkaline aqueous neutralizer solution added will typically be within the range of 1 weight percent to 50 weight percent based upon the weight of the polymer cement. More typically, the amount of the alkaline aqueous neutralizer solution added will be within the range of 4 weight percent to 35 weight percent based upon the weight of the polymer cement. Preferable, the amount of the alkaline aqueous neutralizer solution added will be within the range of 5 weight percent to 15 weight percent based upon the weight of the polymer cement.

The alkaline aqueous neutralizer solution will typically have a pH which is within the range of from 7.1 to 9.5. The alkaline aqueous neutralizer solution will more typically have a pH which is within the range of from 7.5 to 9.0, and will preferable have a pH that is within the range of from 8.0 to 8.5. The alkaline aqueous neutralizer solution will generally be a solution of an inorganic base, such as a sodium carbonate, a potassium carbonate, a sodium bicarbonate, a potassium bicarbonate, a sodium phosphate, a potassium phosphate, and the like. For instance, the alkaline aqueous neutralizer solution can be a 0.25 weight percent solution of sodium bicarbonate in water. Since the alkaline aqueous neutralizer solution is not soluble with the polymer cement it is important to utilize a significant level of agitation to mix the alkaline aqueous neutralizer solution into throughout the polymer cement to terminate the polymerization. Since the alkaline aqueous neutralizer solution is not soluble in the polymer cement it will readily separate after agitation is discontinued.

While the incorporation of the monomer of formula I via direct insertion polymerization to stereoregular polar functionalized dienes is successful, there are still functional groups that cannot be directly incorporated. For example, primary amine groups RNH₂ are incompatible with the catalytic systems used. To produce the corresponding primary amine functionalized copolymer, the trialkylsilyl groups present in copolymers of the monomer of formula I can be cleaved by the reaction with MeOH to give polydienes functionalized with primary amine groups: 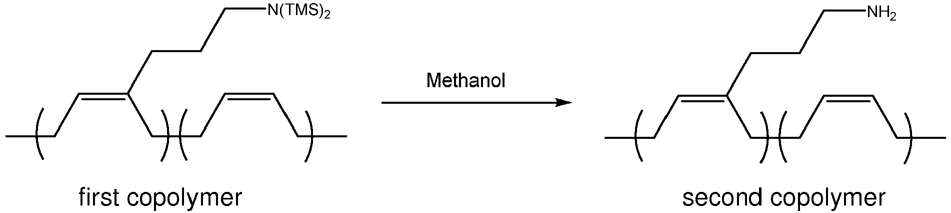 where R¹ and R² of units derived from monomer I are shown in the above example as propane diyl and trimethylsilyl groups.

In a second step of the method then, the first copolymer in solution is mixed with methanol followed by stirring to convert the first copolymer to the second copolymer. The addition of defined amounts of methanol to the copolymer solution followed by stirring for a sufficient amount of times ensures the complete deprotection of the amine groups. Precipitation in methanol of the copolymer can lead to only partially deprotected amine groups. In one embodiment, methanol is added to the first copolymer in solution in an amount corresponding to 40 equivalent to monomer of formula I. After methanol addition, the subsequent mixture is stirred for about 2 hours to ensure complete conversion of the trialkylsilyl groups to primary amine groups. The resulting copolymer functionalized with primary amine groups may be isolated and purified using methods as are known in the art.

The second copolymer so converted may be given by the formula poly(M1 co M2) wherein M1 is the first monomer and M2 is of formula II 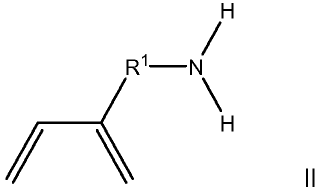 where R¹ is as previously defined.

The copolymer of the invention may be compounded into a rubber composition.

The rubber composition may optionally include, in addition to the copolymer, one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of from 20 to 28 percent bound styrene or, for some applications, an E-SBR having a medium to relatively high bound styrene content, namely, a bound styrene content of from 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of from 2 to 30 weight percent bound acrylonitrile in the terpolymer.

Emulsion polymerization prepared styrene/butadiene/acrylonitrile copolymer rubbers containing from 2 to 40 weight percent bound acrylonitrile in the copolymer are also contemplated as diene based rubbers for use in this invention.

The solution polymerization prepared SBR (S-SBR) typically has a bound styrene content in a range of from 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR is preferably characterized by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition preferably includes from 10 to 150 phr of silica. In another preferred embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of from 40 to 600 square meters per gram. In another embodiment, the BET surface area may be in a range of from 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of from 100 to 400, alternatively from 150 to 300.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra-high molecular weight polyethylene (UHMWPE), crosslinked particulate polymer gels including but not limited to those disclosed in US-B-6,242,534; US-B-6,207,757; US-B-6,133,364; US-B-6,372,857; US-A-5,395,891; or US-B-6,127,488, and plasticized starch composite filler including but not limited to that disclosed in US-A-5,672,639. Such other fillers may be used in an amount ranging from 1 to 30 phr.

In one embodiment, the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples. Unless specifically indicated otherwise, parts and percentages are given by weight.

### Example 1

Comonomer **1** (4-methylene-5-hexenyl)-bis(trimethylsilyl)amine was synthesized by Kumada-coupling of TMS₂N-(CH₂)₃-MgCl with chloroprene catalyzed by (dppp)NiCl₂.

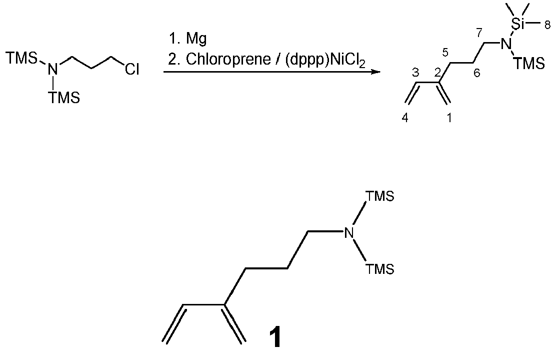

Magnesium turnings (2.25 g, 92.5 mmol, 1.5 equiv.) were layered with THF and activated with dibromoethane (0.36 mL, 0.79 g, 4.2 mmol). A mixture of (3-chloropropyl)-bis(trimethylsilyl)amine (15.0 g, 63.1 mmol, 1 equiv., synthesized according to Davis et al. Journal of Materials Chemistry A 2014, 2, (39), 16507-16515) and dibromoethane (0.36 mL, 0.79 g, 4.2 mmol) in THF (63 mL) was added dropwise and the reaction mixture was stirred for 2 h at 60 °C. Residual magnesium was filtered off, and the clear solution was used in the next step.

(dppp)NiCl₂ (0.252 g, 0.50 mmol) and chloroprene (5.9 g, 66.2 mmol, 1.05 equiv.) were dissolved in THF (21 mL). The reaction mixture was cooled to 0 °C and after the dropwise addition of the (3-(bis(trimethylsilyl)amino)propyl)magnesium chloride solution, the mixture was stirred for 10 minutes at 0 °C and afterwards for 40 minutes at room temperature. Heptane (100 mL) was added to the reaction mixture and THF was removed under reduced pressure. The resulting brown suspension was filtered over celite and the solvent was removed under reduced pressure. The crude product was purified by distillation (73 °C / 3.3·10⁻¹ mbar) to yield (4-methylene-5-hexenyl)-bis(trimethylsilyl)-amine (12.27 g, 48 mmol, 76%) as a colorless liquid.
**¹H-NMR** (400 MHz, C₆D₆, 27 °C) δ = 6.31 (dd, ³*J*_{HH}= 17.6 and 11.2 Hz, 1H, H3), 5.17 (d, ³*J*_{HH}= 17.6 Hz, 1H, H4), 4.97 (d, ³*J*_{HH}= 11.2 Hz, 1H, H4), 4.93 (s, 2H, H1), 2.78 (m, 2H, H7), 2.06 (t, ³*J*_{HH}= 7.6 Hz, 2H, H5), 1.59 (m, 2H, H6), 0.13 (s, 18H, H8). **¹³C-NMR** (100 MHz, C₆D₆, 27 °C) δ = 146.3 (C2), 139.2 (C3), 116.1 (C1), 113.4 (C4), 45.9 (C7), 34.1 (C5), 29.4 (C6), 2.3 (C8).

### Example 2

Comonomer **1** was copolymerized with 1,3-butadiene and isoprene using different Nd-based catalytic systems. These catalytic systems are based on the widely employed Nd-precursor Nd(versatate)₃ (NdV) and are activated with Al-alkyls diisobutylaluminium hydride (DIBALH) or triisobutylaluminium (TIBA) and a Cl-source ethylaluminium sesquichloride (EASC) or [PhNMe₂H]⁺ [B(C₆F₅)₄]⁻. The polymerizations were conducted at elevated temperatures (50-60 °C) in aromatic solvents (benzene or toluene).

### Copolymerizations in an NMR Tube

The used comonomer was mixed with a certain amount of a BD stock solution (2.1 mmol BD per gram solution in C₆D₆). C₆D₆ was added to this mixture if necessary, to reach a total volume of 0.6 mL. This solution was transferred into an NMR tube. To start the polymerization, a certain amount of a preactivated catalyst stock solution (equal to 0.5 µmol Nd) in C₆D₆ was added by syringe immediately before starting the NMR measurements at the indicated temperature. The reactions were monitored by ¹H NMR spectroscopy. The copolymers were worked up by precipitation in dry acetonitrile or methanol (if deprotection is desired) followed by drying under reduced pressure at 50 °C.

### Copolymerizations in a Glass Vial

The used comonomer was mixed with a certain amount of a BD stock solution (2.1 mmol BD per gram solution in toluene) in a glass vial with a magnetic stir bar. To start the polymerization, a certain amount of a preactivated catalyst stock solution was added by syringe (equal to 0.5 µmol Nd). The vial was stirred at 60 °C. The polymerization was quenched by the addition of BHT or a BHT-methanol solution (1 mg BHT per 1 mL MeOH). The copolymers were worked up by precipitation in dry acetonitrile or methanol (if deprotection is desired) followed by drying under reduced pressure at 50 °C.

### Preparation of Catalyst Stock Solutions

Diisobutylaluminium hydride (DIBALH), triisobutylaluminium (TIBA), ethylaluminium sesquichloride (EASC).
**A**: Nd(versatate)₃:TIBA:EASC (1:20:1). 10 equiv. of BD (stock solution in C₆D₆ or toluene, 2.1 mmol/g) and TIBA (20 equiv.) were added to a glass vial. Nd(versatate)₃ (NdV, 1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.
**B:** NdV:DIBALH:EASC (1:20:1). 10 equiv. of BD (stock solution in C₆D₆ or toluene, 2.1 mmol/g) and DIBALH (20 equiv.) were added to a glass vial. NdV (1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.
**C:** NdV:TIBA:EASC: DIBALH (1:20:1:10). 10 equiv. of BD (stock solution in C₆D₆ or toluene, 2.1 mmol/g), TIBA (20 equiv), and DIBALH (10 equiv.) were added to a glass vial. NdV (1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.

Results of various polymerizations are given in Table 1

**Table 1**

| entry | cat. | time | diene | func. diene comon. | func. diene : Al ratio | comon. content in polymer^{d)} | M*ₙ*^{e)} | M_{w}/Mₙ^{e)} | 1,4-*cis-*content^{f)} | 1,4-*trans-*content^{f)} | vinyl-content^{f)} |
|---|---|---|---|---|---|---|---|---|---|---|---|
| | | [h] | [mmol] | [µmol] | [x:1] | [mol%] | [10³ g mol⁻¹] | | [%] | [%] | [%] |
| 1-1 | A^{a)} | 30 | BD: 1.2 | **1** (51) | 5 | 4.2 | 59 | 3.5 | 96.7 | 3.0 | 0.2 |
| 1-2 | B^{b)} | 19 | BD: 0.5 | **1** (76) | 7 | 13.1 | 40 | 1.9 | 94.0 | 5.8 | 0.2 |
| 1-3 | B^{b)} | 19 | BD: 1.2 | **1** (430) | 41 | 45 | 77 | 2.8 | 97.4 | 2.5 | 0.1 |
| 1-4 | B^{b), g), h)} | 8 | -- | **1** (509) | 24 | 100 | n.d. | n.d. | 88 | 8 | 4 |
| 1-5 | C^{c), g), h)} | 8 | -- | **1** (705) | 23 | 100 | 21 | 5 | 90 | 6 | 4 |
| 1-6 | B^{b)} | 19 | IP:0.8 | **1** (98) | 9 | 11.3 | 105 | 2.4 | 97 | 1 | 2 |
| 1-7 | C^{c)} | 12 | IP:0.4 | **1** (400) | 26 | 42.8 | 49 | 5.7 | 92 | 5 | 3 |

All reactions performed with 0.5 µmol of Nd at 333K (until otherwise noted) in NMR-tubes in C₆D₆ until > ca. 90 - 95% diene conversion was reached. a) A: Nd(versatate)₃:TIBA:EASC (1:20:1). b) B: NdV:DIBALH:EASC (1:20:1). c) C: NdV:TIBA:EASC: DIBALH (1:20:1:10). d) Determined by ¹H NMR spectroscopy of crude reaction mixture and/or isolated polymer. e) Determined by GPC in THF vs. PS standards. f) Determined by ¹³C NMR spectroscopy of crude reaction mixture and/or isolated polymer. g) 1 µmol Nd. h) Reaction at 353 K.

### Example 3

¹H- and 1D-TOCSY NMR spectra of the dissolved polymer are shown in Figure 1. The -N*H*₂ groups 9 present in the polymer resonate at 0.54 ppm and 1D-TOCSY spectroscopy reveals the connectivity along the propyl side chain to the PBD backbone: Excitation of nitrogen bound -C*H*₂- group 7 (spectrum 2, Figure 1), results in magnetization transfer through coupling to C*H*₂ groups 6 and 5 as well as to -N*H*₂ group 9. Additionally, responses of olefinic -C*H*= group 3 and even of the polybutadiene backbone are observed. Irradiation at 0.54 ppm (N*H*₂ group 9, spectrum 1, Figure 1 ) shows the inverted responses of C*H*₂ groups 7, 6, and 5 clearly corroborating the functionalization with RNH₂ groups. Figure 1: ¹H-NMR (topmost spectrum) and 1D-TOCSY spectra of a BD-**1** copolymer after cleavage of the TMS-groups with MeOH (table 1, entry 1-1, recorded at 27 °C in C₆D₆). Residual THF is marked with *.

## Claims

1. A functionalized elastomer given by the formula poly (M1 co M2) wherein M1 is a first monomer and M2 is of formula II 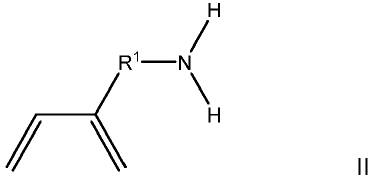 where R¹ is phenylene, a linear or branched alkane diyl group containing from 1 to 10 carbon atoms, or a combination of one or more phenylene groups and one or more linear or branched alkane diyl groups containing from 1 to 10 carbon atoms, **characterized in that** the first monomer is 1,3-butadiene and **in that** the elastomer comprises at least 90 percent by weight of cis 1,4 microstructure content based on the weight of the polybutadiene content of the elastomer.

2. The functionalized elastomer of claim 1, wherein the elastomer comprises at least 95 percent by weight of cis 1,4 microstructure content based on the weight of the polybutadiene content of the elastomer.

3. A rubber composition comprising the functionalized elastomer of at least one of the previous claims.

4. A pneumatic tire comprising the rubber composition of claim 3.

## Patentansprüche

1. Funktionalisiertes Elastomer, das durch die Formel poly(M1 co M2) gegeben ist, wobei M1 ein erstes Monomer ist und M2 der Formel II ist 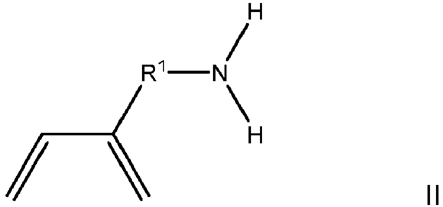 wobei R¹ Phenylen, eine lineare oder verzweigte Alkandiylgruppe, die von 1 bis 10 Kohlenstoffatome enthält, oder eine Kombination aus einer oder mehreren Phenylengruppen und einer oder mehreren linearen oder verzweigten Alkandiylgruppen, die 1 bis 10 Kohlenstoffatome enthalten, ist, **dadurch gekennzeichnet, dass** das erste Monomer 1,3-Butadien ist und, dass das Elastomer wenigstens 90 Gew.-% des cis-1,4-Mikrostrukturgehalts basierend auf dem Gewicht des Polybutadiengehalts des Elastomers umfasst.

2. Funktionalisiertes Elastomer nach Anspruch 1, wobei das funktionalisierte Elastomer wenigstens 95 Gew.-% eines cis-1,4-Mikrostrukturgehalts basierend auf dem Gewicht des Polybutadiengehalts des funktionalisierten Elastomers umfasst.

3. Kautschukzusammensetzung, die das funktionalisierte Elastomer nach wenigstens einem der vorhergehenden Ansprüche umfasst.

4. Luftreifen, der die Kautschukzusammensetzung nach Anspruch 3 umfasst.

## Revendications

1. Élastomère fonctionnalisé répondant à la formule poly (M1 co M2), dans laquelle M1 représente un premier monomère et M2 répond à la formule II 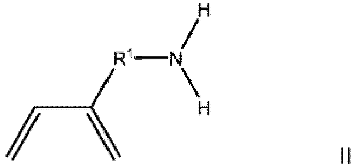 dans laquelle R¹ représente un groupe phénylène, un groupe alcadiényle à chaîne droite ou à chaîne ramifiée qui contient de 1 à 10 atomes de carbone, ou bien une combinaison d'un ou de plusieurs groupes phénylène et d'un ou de plusieurs groupes alcadiényle à chaîne droite ou à chaîne ramifiée qui contiennent de 1 à 10 atomes de carbone, **caractérisé en ce que** le premier monomère est du 1,3-butadiène et **en ce que** l'élastomère comprend au moins 90 % en poids d'une microstructure 1,4-cis, en se basant sur le poids de la teneur de l'élastomère en polybutadiène.

2. Élastomère fonctionnalisé selon la revendication 1, dans lequel l'élastomère comprend au moins 95 % poids d'une microstructure 1,4-cis, en se basant sur le poids de la teneur de l'élastomère en polybutadiène.

3. Composition de caoutchouc qui comprend l'élastomère fonctionnalisé selon au moins une des revendications précédentes.

4. Bandage pneumatique qui comprend la composition de caoutchouc selon la revendication 3.
